# EUROPÄISCHE PATENTSCHRIFT

(11) **EP 1 078 219 B1**
(45) Veröffentlichungstag und Bekanntmachung des Hinweises auf die Patenterteilung: **23.06.2004**
(21) Anmeldenummer: 99929062.0
(22) Anmeldetag: 29.04.1999
(51) Int. Cl.: G01B 11/24, A61B 5/107, G06T 9/20, G06T 7/60

(54) **ERFASSUNG DER RÄUMLICHEN STRUKTUR EINER DREIDIMENSIONALEN OBERFLÄCHE**
DETECTION OF THE SPATIAL STRUCTURE OF A THREE-DIMENSIONAL SURFACE
DETECTION DE LA STRUCTURE SPATIALE D'UNE SURFACE TRIDIMENSIONNELLE

(30) Priorität: 14.05.1998 DE 19821611
(43) Veröffentlichungstag der Anmeldung: 28.02.2001
(73) Patentinhaber: OraMetrix GmbH, 10179 Berlin (DE)
(72) Erfinder: RUBBERT, Rüdger, D-12101 Berlin (DE)
(74) Vertreter: Weber, Dieter, Dr.
(86) Internationale Anmeldenummer: PCT/DE1999/001277
(87) Internationale Veröffentlichungsnummer: WO 1999/060332

(56) Entgegenhaltungen:
- EP-A- 0 294 577
- DE-A- 4 436 500
- DE-A- 19 638 727
- US-A- 4 825 263
- US-A- 4 867 570
- YEE S R ET AL: "THREE-DIMENSIONAL IMAGING SYSTEM" OPTICAL ENGINEERING, Bd. 33, Nr. 6, 1. Juni 1994 (1994-06-01), Seiten 2070-2075, XP000454696 ISSN: 0091-3286

## Beschreibung

Die vorliegende Erfindung betrifft ein Verfahren zur Erfassung der räumlichen Struktur einer dreidimensionalen Oberfläche durch Projizieren eines Musters auf die Oberfläche entlang einer Projektionsrichtung, die eine erste Achse definiert, und durch pixelweise Erfassung mindestens eines Bereiches des auf die Oberfläche projizierten Musters mit Hilfe eines oder mehrerer Sensoren in einer Betrachtungsrichtung des Sensors oder der Sensoren, welche eine zweite Achse definiert, wobei die erste und die zweite Achse (oder eine zur zweiten Achse parallele Gerade) sich unter einem von 0° verschiedenen Winkel schneiden, so daß die erste und die zweite Achse (bzw. die hierzu parallele Gerade) eine Triangulationsebene aufspannen, wobei das Muster mindestens bei Projektion in eine Ebene senkrecht zur ersten Achse durch eine sich ändernde, von dem Sensor (Sensoren) erfaßbare physikalische Größe definiert ist und wobei das Muster derart ausgestaltet ist, daß die Differenz der physikalisch meßbaren Größe, gemessen zwischen vorgebbaren Bildpixeln oder Pixelgruppen entlang einer vorgebbaren, vorzugsweise zur Triangulationsebene parallelelen, Pixelreihe mindestens zwei verschiedene Werte annimmt

Ein solches Verfahren ist beispielsweise bekannt geworden durch das US-Patent 5,615,003.

Das in dieser Patentschrift konkret offenbarte Muster hat sehr viel Ähnlichkeit mit den Strichcodes, wie sie schon seit langem z. B. im Einzelhandel zur Identifizierung von Produkten und Preisen Verwendung finden, wobei die Folge unterschiedlich dicker Striche oder Balken eine Reihe von Binärzahlen definiert, die z. B. einem Produkt und seinem Preis eindeutig zugeordnet ist. Für die Zwecke der Erfassung der räumlichen Struktur einer dreidimensionalen Oberfläche werden allerdings die Strichbreiten und Abstände zwischen derartigen Strichen je nach der konkreten Struktur der Oberfläche verzerrt, und das bekannte Verfahren zeichnet sich durch Einrichtungen und Maßnahmen aus, die trotz der Verzerrung eine Identifizierung bestimmter Bereiche des Strichmusters ermöglichen, so daß das erfaßte, verzerrte Muster an das projizierte Muster angepaßt werden kann, wobei die Parameter einer solchen Anpassung die Struktur der Oberfläche liefern, welche die genannten Verzerrungen hervorruft.

Ein anderes, ähnliches Verfahren, welches ein kodiertes Muster verwendet, ist aus der deutschen Patentanmeldung 196 38 727 bekannt, wobei dieses Verfahren sich nicht auf die Kodierung eines Musters nur in einer Richtung beschränkt, sondern aus einzelnen unterscheidbaren Musterelementen mit jeweils ähnlicher Struktur und Größe zusammengesetzt ist, wobei sich die Musterelemente auch in zueinander senkrechten Richtungen wechselseitig voneinander unterscheiden. Ein kodiertes Muster ist dadurch gekennzeichnet, daß zumindest Ausschnitte des Musters, die eine bestimmte Mindestgröße haben, sich an keiner Stelle auf der gesamten Musterfläche wiederholen. Auch wenn diese Forderung nicht im strengen Sinne erfüllt ist, so bedeutet dies, daß durchaus auch Wiederholungen von Musterstrukturen vorkommen können, solange diese Wiederholungen auf der Musterfläche nur hinreichend weit auseinanderliegen, so daß bei der Auswertung einer abgebildeten Musterstruktur eine Verwechselung zwischen zwei zufällig identischen Bereichen des Musters praktisch ausgeschlossen ist.

In der deutschen Offenlegungsschrift DE 196 38 727 wird ein Verfahren zur Erhöhung der Signifikanz der dreidimensionalen Vermessung von Objekten durch optische Aufnahmen eines aufprojizierten Musters und Triangulationsberechnung beschrieben, bei dem ein codiertes Muster auf das Objekt projiziert wird, um Mannigfaltigkeiten bei der Auswertung der Bilddaten zu vermeiden.

In dem Artikel "Three-dimensional Imaging System" von Soung R. Yee und Paul M. Griffin in "Optical Engineering, Juni 1994, Band 33, Nr. 6, wird ein bildgebendes System beschrieben, das die räumlichen Koordinaten dreidimensionaler Objekt mit Hilfe von Triangulation beschreibt. Das dargestellte System benötigt ein einziges Bild und ermöglicht eine eindeutige Zuordnung der Koordinaten durch Verwendung eines codierten Lichtmusters.

Die Druckschrift DE 44 36 500 A1 beschreibt ein optisches Projektionsgitter zur dreidimensionalen Vermessung von Objekten mit binärer optischer Dichteverteilung zur Erzeugung eines projizierten Streifenbildes mit sich periodisch änderndem Transmissionsverlauf, wobei das Gitter zum projizierten Streifenverlauf senkrechte Gitterstreifen aufweist, deren Streifenbreite sich entlang ihrer Längsrichtung periodisch und zu den Nachbarstreifen phasengleich ändert.

Alle bisher bekannten Verfahren arbeiten jedoch grundsätzlich nach dem Prinzip der Mustererkennung, d. h. der rechnerisch nachvollzogenen Abbildung des ebenen Musters auf das aus der Betrachtungsrichtung auf einer nichtebenen Oberfläche abgebildete, verzerrte Muster. Dabei treten jedoch immer dann Probleme auf, wenn sich in der Abbildung abhängig von der räumlichen Erstreckung oder sonstigen Ausbildung der Oberfläche der Informationsgehalt des projizierten Musterelementes verändern kann. Wenn z. B. die zu messende und sich ändernde physikalische Größe, durch welche die Musterstruktur definiert wird, die Farbe des Musters oder einzelner Musterelemente beinhaltet, so kann die Interpretation von Farbinformation im projizierten Muster durch eine farbliche Ausgestaltung der Oberfläche gestört oder gar unmöglich gemacht werden. Bei der Verwendung unterschiedlicher Linienbreiten für ein Muster hängt die Linienbreite in der Abbildung nicht nur von Neigungen der Oberfläche in einer Richtung parallel zur Triangulationsebene, sondern auch von Neigungen des Objektes bzw. der Oberfläche bezüglich einer Normalen zur Triangulationsebene. Dies bedeutet, daß bei der Projektion unterschiedlich breiter Linien aufgrund einer ungünstigen Ausbildung der räumlichen Erstreckung der Oberfläche sich beispielsweise eine schmale Linie im Abbild in einer Breite darstellt, die in der Größenordnung des Abbilds einer im projizierten Muster breiten Linie liegt und dementsprechend bei der Auswertung zu einer falschen Information führen kann.

Außerdem stellt die Auswertung kodierter Muster mit unterschiedlicher geometrischer Ausbildung von Musterelementen sehr hohe Anforderungen an die auswertende Datenverarbeitung, da sich im Abbild die Geometrie der projizierten Musterelemente stark verzeichnet wiederfinden kann.

Gegenüber dem vorstehend geschilderten Stand der Technik ist es Aufgabe der vorliegenden Erfindung, ein Verfahren zur Erfassung der räumlichen Struktur einer dreidimensionalen Oberfläche zu schaffen, welches von verschiedenen Neigungen bezüglich einer Normalen zur Triangulationsebene und auch von den sonstigen Oberflächeneigenschaften, welche unabhängig von der räumlichen Erstreckung der Oberfläche die zu messende physikalische Größe beeinflussen können, weitgehend unabhängig ist.

Diese Aufgabe wird dadurch gelöst, daß zur Auswertung der abgebildeten Musterstruktur jeweils nur Änderungen der physikalischen Größe zwischen den vorgebenen Pixeln oder vorgegebenen Pixelgruppen einer oder mehrerer, vorzugsweise zur Triangulationsebene parallelen, Pixelreihen erfaßt und in räumliche Koordinaten der Oberfläche umgerechnet werden.

Dabei werden die Änderungen der physikalischen Größe mindestens in Ihrer zur Triangulataionsebene parallelen Komponente erfaßt und in räumliche Koordinaten umgerechnet.

Dadurch daß lediglich Änderungen der zu erfassenden physikalischen Meßgröße des Musters, vorzugsweise zwischen benachbarten Pixeln oder benachbarten Pixelgruppen, erfaßt werden, werden spezielle Oberflächeneigenschaften gleichsam eliminiert, da die Oberflächenbereiche, die vor allem durch benachbarte Pixel abgebildet werden, im Regelfall die gleichen Eigenschaften haben. Auch die Neigung der Oberfläche gegenüber einer Normalen zur Triangulationsebene wirkt sich in keiner Weise auf die Erfassung und gegebenenfalls Identifizierung der Musterstruktur aus, da nicht das Muster hinsichtlich seiner speziellen Maße und Formen erfaßt und mit dem ursprünglichen Projektionsmuster verglichen und angepaßt wird, sondern da lediglich die in vorgebenen, vorzugsweise benachbarten, Pixeln oder Pixelgruppen gemessenen Werte der interessierenden physikalischen Größe miteinander verglichen werden, konkret durch Bilden der Differenz. Das konkret abgebildete Muster ergibt sich dann einfach anhand charakteristischer Veränderungen der physikalischen Größe von bestimmten Pixeln zu anderen vorgebenen Pixeln, vor allem ihren Nachbarpixeln, bzw. von bestimmten Pixelgruppen zu anderen vorgegebenen, vorzugsweise benachbarten, Pixelgruppen, oder entlang einer anderen geeigneten Folge von miteinander zu vergleichenden Pixeln.

Da erfindungsgemäß die Änderung der in den Bildpixeln erfaßten bzw. wiedergegebenen Werte der konkret ausgewerteten physikalischen Größe mindestens zwei verschiedene Werte annehmen kann, lassen sich durch diese unterschiedlichen Änderungswerte, die von Pixel zu Pixel bzw. von Pixelgruppe zu Pixelgruppe auftreten können, Strukturen definieren und wiedererkennen, ohne daß die speziellen Eigenschaften der Oberfläche dabei eine Rolle spielen.

Zweckmäßigerweise wird das Muster so ausgerichtet, daß sich in einer vorgebenen Meßrichtung, entlang welcher Pixel oder Pixelgruppen miteinander verglichen werden, mindestens teilweise dem Betrag nach maximale Änderungswerte ergeben, während die übrigen auftretenden Änderungsswerte dem Betrag nach vergleichsweise klein sind oder den Wert Null haben.

In einer bevorzugten Variante der bevorzugten Erfindung werden jeweils mehrere in einer Spalte übereinanderliegende Pixel von in Spaltenrichtung benachbarten Pixelreihen zu einer Pixelgruppe zusammengefaßt, und es werden die Änderungen der physikalischen Größe und jeweils zwischen derartigen in Zeilenrichtung benachbarten Pixelgruppen ausgewertet. Es könnten jedoch auch Gruppen von benachbarten Pixeln verglichen werden, die jeweils aus mehreren, in Zeilenrichtung nebeneinanderliegenden Pixeln bestehen. In einer Variante dieser Ausgestaltung können die zu je einer Gruppe zusammengefassten Pixel aus mehreren Zeilen auch jeweils gegeneinander versetzt sein, also aus verschiedenen, vorzugsweise aber nahe beieinander liegenden Spalten stammen.

Es versteht sich im übrigen, daß die "Zeilen" und "Spalten" von Pixeln eines Bildsensors oder Bildes, so wie diese Begriffe im Rahmen der vorliegenden Anmeldung verwendet werden, nicht notwendigerweise entlang gerader und einander senkrecht schneidender Linien verlaufen müssen.

Besonders bevorzugt ist eine Ausführungsform der Erfindung, bei welcher das Muster als kodiertes Muster ausgebildet ist, wobei diese Anforderung nicht im strengen Sinne zu verstehen ist.

Zweckmäßigerweise sind die Musterstrukturen im Vergleich zur Gesamtausdehnung des Musters relativ klein, und auch die Mindestgröße der Flächenbereiche, die eine Musterstruktur aufweisen, welche sich nicht wiederholt, sollte im Vergleich zur Gesamtfläche des Musters möglichst klein sein, da sich auf diese Weise die jeweiligen eindeutig identifizierbaren Musterstrukturen entsprechend genau lokalisieren lassen. In hinreichend großem Abstand dürfen jedoch bei manchen Anwendungsfällen auch Musterwiederholungen auftreten.

Weiterhin ist eine Ausgestaltung der Erfindung bevorzugt, bei welcher das Muster von einzelnen Musterelementen gebildet wird, die in einer Ebene senkrecht zur Projektionsrichtung jeweils in etwa gleich große Flächen beanspruchen. Die gleich großen Flächenbereiche einzelner Musterelemente erleichtern die Auswertung, wenn z. B. Übergänge von einem Musterelement zum anderen besonders markant sind und damit deutlich erfaßt werden oder wenn bestimmte Bereiche einzelner Musterelemente starke Änderungen der zu messenden physikalischen Größe in Zeilenrichtung der Bildpixel aufweisen und damit als gut lokalisierbarer Mustererkennungspunkt dienen.

Dabei ist eine Ausführungsform der vorliegenden Erfindung besonders bevorzugt, bei welcher mindestens zwei Typen von Musterelementen vorgesehen sind, in deren Bereich die physikalische Größe jeweils ein konstantes Niveau bzw. einen konstanten Wert hat, wobei sich dieser Wert der betreffenden physikalischen Größe zwischen den beiden Typen von Musterelementen jeweils deutlich meßbar unterscheidet. Auf diese Weise können sehr einfach die Übergänge von einem Musterelement des ersten Typs zu einem Musterelement des zweiten Typs und umgekehrt festgestellt werden. Die Differenzen, die zwischen benachbarten Pixeln bzw. Pixelgruppen gebildet werden, nehmen bei derartigen Musteretementen den Wert Null an, wenn sich die zu vergleichenden Pixel bzw. Pixelgruppen innerhalb desselben Musterelementes befinden und nehmen den deutlich meßbaren Unterschiedswert zwischen den beiden Typen von Musteretementen an, wenn das eine Pixel bzw. die eine Pixelgruppe das eine der beiden Musterelemente abbildet, während das benachbarte Pixel bzw. die benachbarte Pixelgruppe das jeweils andere Musterelement abbildet. Auf diese Weise ergeben sich an den Übergängen von einem Musterelement zum anderen jeweils deutlich meßbare Änderungen und insofern auch Meßpunkte zur Identifizierung der Musterstruktur und der Lage dieser Übergänge. Dies gilt selbst dann, wenn die Oberflächeneigenschaften des untersuchten Gegenstandes sich im projizierten Musterbereich erheblich ändern, so daß die gleichen Übergänge zwischen identischen Musterelementen, jedoch an verschiedenen Orten der Oberfläche, deutlich verschiedene Differenzen zeigen und dennoch als gleichartige Übergänge erkannt werden, weil die Differenz sich in beiden Fällen immer noch deutllich von anderen auftretenden Differenzwerten (zum Beispiel dem Differenzwert Null) unterscheiden.

Darüberhinaus ist eine Ausführungsform der vorliegenden Erfindung bevorzugt, bei welcher mindestens ein Typ bzw. ein weiterer Typ eines Musterelementes vorgesehen ist, in dessen Flächenbereich sich entlang einer vorgegebenen Richtung der Wert der zu erfassenden physikalischen Größe kontinuierlich verändert. Bei einem derartigen Musterelement sind die Änderungen der physikalischen Größe zwischen benachbarten Pixeln oder Pixelgruppen im allgemeinen relativ klein, wobei aufgrund der kontinuierlichen Veränderung der physikalischen Größe im Bereich bzw. in einem Teilbereich dieses Musterelementes diese Änderungswerte zwischen allen benachbarten Pixeln oder Pixelgruppen jeweils gleich sind. Erst beim Übergang zu einem anderen Musterelement oder aber wenn man einen Bereich des Musterelementes erreicht, in welchem die physikalische Größe sich nicht mehr kontinuierlich entsprechend dem vorher definierten Maß ändert, kann eine größere Differenz der physikalischen Größe zwischen benachbarten Pixeln oder Pixelgruppen auftreten, die wiederum charakteristisch für einen bestimmten Bereich des Musters ist.

Besonders bevorzugt ist dabei eine Ausführungsform der vorliegenden Erfindung, bei welcher zwei Typen derartiger Musterelemente mit kontinuierlicher Änderung der physikalischen Größe innerhalb mindestens eines Teilbereiches dieser Musterelemente vorgesehen ist, wobei sich diese beide Typen voneinander dadurch unterscheiden, daß entlang der vorgegebenen Richtung bezüglich der fortschreitenden Vergleiche benachbarter Pixel oder Pixelgruppen das Vorzeichen der Änderung der physikalischen Meßgröße gerade umgekehrt ist. In dem betreffenden Flächenbereich des Musterelementes eines ersten Typs nimmt also der Wert der interessierenden physikalischen Größe z. B. von Pixel zu Pixel jeweils um den gleichen Wert zu, während dieser Wert bei dem anderen Typ von Musterelement von Pixel zu Pixel jeweils um einen entsprechenden Betrag abnimmt.

Beim Übergang zu einem benachbarten Musterelement können allerdings erheblich größere Differenzen in den Werten der physikalischen Größe zwischen benachbarten Pixeln oder Pixelgrupen auftreten.

Die Musterelemente mit einer mindestens bereichsweise mehr oder weniger kontinuierlichen Änderung der physikalischen Größe ermöglichen es, daß man beim Übergang zu benachbarten Pixeln oder Pixelgruppen am Übergang zu einem weiteren Musterelement einen deutlichen Sprung der physikalischen Größe jeweils in derselben Richtung erhalten kann, während bei den zuvor definierten Typen von Musterelementen, innerhalb deren Flächenbereich die physikalische Meßgröße jeweils einen konstanten Wert hat, das Vorzeichen der Änderung beim Übergang zum nächsten Musterelement, sofern überhaupt eine Änderung vorhanden ist, eindeutig durch den Wert der physikalischen Größe in dem voraufgehenden Musterelement festgelegt ist.

Die Änderung kann dabei zwar zwei verschiedene Werte annehmen, die sich jeweils um ihr Vorzeichen voneinander unterscheiden, je nachdem von welchem der zwei Typen von Musterelementen aus der Übergang zu dem jeweils anderen Typ stattgefunden hat, jedoch kann nach einer zuvor erfolgten positiven Änderung des Wertes der physikalischen Meßgröße bei derartigen Musterelementen beim Übergang zum nächsten Musterelement nur eine negative oder keine Änderung erfolgen und umgekehrt. Dagegen ist es bei den Typen von Musterelementen, die eine bereichsweise kontinuierliche Änderung aufweisen, die aber zwischen jeweils benachbarten Pixeln innerhalb dieser Bereiche relativ klein ist und deshalb ignoriert werden kann, der Wert der physikalischen Größe kontinuierlich immer wieder auf einen zuvor schon erreichten Wert gebracht werden, der dann beim Übergang zum nächsten Musterelement oder auch innerhalb des gegebenen Musterelementes abrupt geändert wird, wobei diese abrupte Änderung als charakteristisches Strukturelement des Musters erfaßt wird und eine bestimmte Richtung bzw. ein bestimmtes Vorzeichen hat, wobei ohne weiteres Änderungen mit dem gleichen Vorzeichen oder etwa mit entgegengesetzten Vorzeichen sich anschließen können, je nachdem welcher Typ von Musterelement der nächstfolgende und der als übernächstes folgende ist.

Bei solchen verschiedenen Typen von Musterelementen ist es selbstverständlich zweckmäßig, wenn diese Typen in einer kodierten Verteilung auf der Fläche des projizierten Musters angeordnet sind, wobei der Begriff der kodierten Verteilung oben bereits erläutert wurde. Ein bevorzugtes Beispiel einer kodierten Verteilung ist einfach eine Zufallsverteilung der verschiedenen. Typen von Musterelementen auf der gesamten Projektionsfläche. Besonders bevorzugt ist es dabei, wenn alle vorstehend definierten Typen von Musteretementen, d. h. sowohl diejenigen, innerhalb deren Flächenbereich die physikalische Größe jeweils ein konstantes Niveau hat, als auch diejenigen, die einen Flächenbereich haben, innerhalb dessen die physikalische Größe sich jeweils kontinuierlich ändert, für die Erzeugung eines solchen Musters verwendet werden.

Zweckmäßigerweise sollte der Flächenbereich eines Musterelementes in der Abbildungsebene maximal eine Anzahl von m x n Pixeln entsprechen, wobei m und n jeweils größer als 2 sind, gleichzeitig m jedoch deutlich kleiner als M, und n deutlich kleiner als N ist, wenn M x N die Gesamtzahl der erfaßten bzw. abgebildeten Bildpixel ist.

Dabei ist es weiterhin zweckmäßig, wenn für die Musterkodierung und Identifikation von Musterelementen bzw. charakteristischen Bereichen des Musters nur Änderungen ausgewertet werden, welche größer sind als die Änderungen zwischen benachbarten Pixelgruppen innerhalb derjenigen Musterelementtypen, die mindestens teilweise eine kontinuierliche Änderung der physikalischen Größe aufweisen. Bereits weiter oben wurde schon erwähnt, daß die kleinen Änderungen der physikalischen Größe, die entlang dieses Bereiches zwischen benachbarten Pixeln oder Pixelgruppen auftreten, im Vergleich zu den relativ starken Änderungen, die zwischen benachbarten Musterelementen auftreten können, ignoriert werden können.

Darüberhinaus ist eine Ausführungsform der Erfindung bevorzugt, bei welcher zwei Messungen mit relativ zueinander abgewinkelten Triangulationsebenen vorgenommen werden, wobei bei den beiden Messungen die Triangulationsebenen vorzugsweise um ca. 90° gegeneinander abgewinkelt sind.

Es erleichtert die Auswertung der Bilddaten wesentlich, wenn bei der Projektion des Musters auf eine Referenzebene die Abbildung der Zeilen des Musters auf dem Bildwandler im wesentlichen parallel zu den Zeilen des Bildwandlers erfolgt. Als Referenzebene wird hier diejenige Ebene bezeichnet, die auf folgende Weise gebildet wird: (i) es wird eine Hilfsgerade definiert, die parallel zur optischen Achse der Projektionseinheit verläuft und die optische Achse der Aufnahmeeinheit schneidet, wobei die durch diese Gerade und die optische Achse der Aufnahmeeinheit aufgespannte Ebene im Sinne dieser Erfindung als "Triangulationsebene" bezeichnet wird; (ii) die Winkelhalbierende der optischen Achse der Aufnahmeeinheit und der Hilfsgeraden wird als Normalenvektor der Referenzebene festgelegt (die Referenzebene liegt damit senkrecht zur Triangulationsebene); (iii) die Referenzebene wird so gelegt, daß der Abstand zwischen den Durchstoßpunkten der beiden optischen Achsen durch die Referenzebene minimal ist. Diese Definition trägt der Tatsache Rechnung, daß sich die beiden optischen Achsen bei einer realen Vorrichtung nicht exakt schneiden werden, auch wenn dies konstruktiv vorgesehen ist. Wenn nun die Zeilen des Musters parallel zur Triangulationsebene verlaufen, so wird das Abbild dieser Zeilen auf dem Bildwandler parallel zu den Zeilen des Bildwandlers verlaufen. Bei der Projektion dieses Musters auf eine Oberfläche, die nicht der Referenzebene entspricht, wird die Abweichung von der Parallelität lediglich klein zweiter Ordnung sein.

Vorteilhaft ist es auch, wenn das Muster derart ausgebildet ist und die Projektion dieses Musters in der Art erfolgt, daß sich bei Projektion des Musters auf eine zur Triangulationsebene senkrecht liegende ebene Fläche mit einheitlicher Oberflächenausbildung eine in Zeilen geordnete Struktur ergibt, diese Zeilen parallel zur Triangulationsebene liegen und sich die charakteristischen vorstehend benannten Maße der Änderung entlang dieser Zeilen ergeben.

Weiterhin ist es zweckmäßig, wenn (i) das Muster unter Verwendung einer Strahlquelle und geeigneter optischer Mittel auf das zu vermessende Objekt projiziert wird; (ii) das zu projizierende Muster flächig, mit im wesentlichen rechtwinklig zueinanderstehenden Zeilen und Spalten mit jeweils gleichmäßiger Teilung ausgebildet ist und in der sich daraus ergebenden Teilung unterschiedliche geometrische Elemente angeordnet sind, die optisch durchlässig, undurchlässig oder teildurchlässig sind; (iii) die Transparenz der teildurchlässigen Elemente in Zeilenrichtung sowohl stetig von undurchlässig zu durchlässig zunimmt oder von durchlässig zu undurchlässig abnimmt; (iv) die geometrischen Elemente im zu projizierenden Muster derart angeordnet sind, daß sich in der Teilung der Spalten zwischen den geometrischen Elementen ein Wechsel von durchlässig zu undurchlässig oder von undurchlässig zu durchlässig derart ergibt, daß aus dem über das Muster verteilten unterschiedlichen Vorzeichen des Maßes der Änderung im Teilungsraster der Spalten sich aus der Bildaufnahme des projizierten Musters von beliebig begrenzten zusammenhängenden Flächensegmenten des Objektes hinreichender Größe eine eindeutige Zuordnung zu der jeweiligen projizierten Musterpartie bestimmen läßt; (v) die vom Objekt reflektierte Strahlung zumindest in Teilen durch geeignete optische Mittel auf einen flächigen CCD-Bildwandler, dessen strahlungsempfindliche Elemente ebenfalls in Zeilen und Spalten organisiert sind, abgebildet und von diesem in ein elektrisches Signal gewandelt wird und in diesem elektrischen Signal der Informationsgehalt der vom Objekt reflektierten Anteile des projizierten Musters zumindest in Teilen enthalten ist; (vi) die Richtungen der optischen Achsen für die Projektion des Musters und für die Abbildung des Objektes auf den Bildwandler voneinander verschieden sind; (vii) die Zeilen des zu projizierenden Musters parallel zur Ebene, die von den optischen Achsen für die Projektion und für die Abbildung der reflektierten Strahlung auf den Bildwandler gebildet wird, ausgerichtet sind; (viii) die elektrischen Signale des Bildwandlers in diskrete Daten umgewandelt und einer Einheit für die Verarbeitung und Speicherung von Daten zugeführt werden; (ix) die Daten der strahlungsempfindlichen Elemente des Bildwandlers in Zeilen, die parallel zu der Triangulationsebene liegen, hinsichtlich des Maßes der Änderung der Strahlungsintensität ausgewertet werden; (x) die sich dabei ergebenden Flanken bei im wesentlichen sprunghaften Änderungen entsprechend dem jeweiligen Vorzeichen des Maßes der Änderung den binären Informationselementen Null und Eins zugeordnet werden und (xi) die sich ergebenden Binärfolgen dazu dienen, Teile des Musters von anderen Teilen des Musters zu unterscheiden.

Besteht beispielsweise ein Muster (i) aus schachbrettartig angeordneten schwarzen und weißen Elementen, wird (ii) das Muster unter Verwendung von sichtbarem Licht und geeigneten optischen Mitteln auf ein weißes Objekt mit beliebiger dreidimensionaler Erstreckung projiziert, wird (iii) von dem Objekt ein Abbild unter Verwendung geeigneter optischer Mittel auf einem flächigen Bildwandler erzeugt, ist (iv) die Projektionsrichtung verschieden von der Aufnahmerichtung, wird (v) das Signal des Bildwandlers digitalisiert, in einer elektronischen Speichereinrichtung zwischengespeichert und einer Datenverarbeitungseinheit zugeführt, ist (vi) der Bildwandler in rechtwinklig zueinander stehenden Zeilen und Spalten organisiert, ist (vii) das Muster in der Projektionseinrichtung derart positioniert, daß sich die Zeilen des schachbrettartigen Musters in Richtung der Zeilen des Bildwandlers erstrecken, sind (viii) sowohl die Projektionseinrichtung als auch die Aufnahmeeinrichtung derart ausgebildet und positioniert, daß der Triangulationswinkel zu einer Verzeichnung des Abbilds des schachbrettartigen Musters in Spaltenrichtung des Bildwandlers erstreckt (mit anderen Worten: erstreckt sich die vom Triangulationswinkel aufgespannte Ebene in Richtung der Spalten des projizierten Musters wie auch des Bildwandlers), ist (ix) die Ausbildung der Musterelemente größer als die Auflösung des Bildwandlers, so lassen sich im Bildspeicher Werte finden, die die Zeileninformation des Bildwandlers repräsentieren und die den Helligkeitswerten der weißen und schwarzen Elemente des schachbrettartigen Musters entsprechen. Wertet man (x) diese Informationen entlang der entsprechenden Zeile des Bildwandlers aus, ergeben sich sprungartige Änderungen der Helligkeitsinformationen entsprechend dem Raster des projizierten Musters. Die Abweichungen der maßlichen Verhältnisse der Helligkeitssprünge entlang einer Bildzeile gegenüber dem entsprechenden projizierten Muster repräsentieren bei bekanntem Strahlengang die räumliche Erstreckung des Objektes. Ist (xi) das Objekt im betrachteten Bereich hinreichend stetig und sowohl aus der Projektions- als auch aus der Aufnahmerichtung optisch zugänglich, ergeben sich in der Folge der Zeileninformation alternierend Helligkeitssprünge von hell nach dunkel und von dunkel nach hell. Werden (xii) die Helligkeitsinformationen durch die Digitalisierung als numerische Werte mit einer zu den Helligkeitswerten proportionalen Zuordnung dargestellt und berechnet man (xiii) die Helligkeitsänderung entlang der bezeichneten Spalte des Bildwandlers aus der Differenz zwischen dem jeweiligen Helligkeitswert an einer bestimmten Stelle und der Helligkeitsinformation der in Zeilenrichtung nachfolgenden Bildstelle, ergeben sich abwechselnd positive und negative Werte, die dem Maß der Helligkeitsänderung entsprechen. Interpretiert man diese diskrete Folge von Werten als Helligkeitssignal, kann von positiven bzw. negativen Flanken dieses Signals gesprochen werden.

In der bevorzugten Ausführungsform der Erfindung werden die Bilddaten, die das aufprojizierte Muster mit der benannten statistischen Verteilung der Musterelemente und damit die entsprechende Kodierung repräsentieren, bezüglich der einzelnen Musterelemente dahingehend überprüft, ob sich anhand der Aufnahme der Informationsgehalt des einzelnen Elementes eindeutig erkennen läßt. Ist diese Eindeutigkeit nicht gewährleistet, ist das entsprechende Musterelement von der weiteren Datenverarbeitung auszuschließen. Aus den eindeutig zu erkennenden Musterelementen werden durch Flankenerkennung und -auswertung im weiteren die Informationselemente generiert und benachbarte eindeutig erkannte Informationselemente sogenannten Clustern zugeordnet. Ein Cluster ist im Sinne dieser Erfindung eine Gruppe benachbarter Informationselemente. Aus dem Vergleich der decodierten Informationen des aufgenommenen, auf das Objekt aufprojizierten Musters mit dem zu projizierenden Musterinhalt kann die Plausibilität der Anordnung der decodierten Informationen überprüft werden. Kommt es hierbei zu Abweichungen, wird das abweichende Informationselement falsifiziert und ausgesondert. Falls das entsprechende Informationselement am Rand des Clusters liegt, ergibt sich eine entsprechend korrigierte Begrenzung. Falls das Informationselement in der Mitte eines Clusters liegt, ist unter Umständen das Cluster zu teilen und die eindeutige Zuordnung beider sich ergebenden Teilcluster neu zu überprüfen. Sofern sich die kleineren Cluster nicht eindeutig zuordnen lassen, sind sämtliche entsprechende Informationselemente zu falsifizieren und auszusondern. Im Ergebnis sind in den Clustern zusammenhängende Oberflächensegmente dargestellt, deren Musterelemente des aufprojizierten Musters sich aufgrund des im Cluster verfügbaren Informationsgehalts der aneinandergrenzenden Musterelemente eindeutig zu dem entsprechenden Musterelement im zu projizierenden Muster zuordnen lassen. Aus der Position beispielsweise des Schwerpunktes oder der sich ergebenden Flanken im Abbild im Vergleich zu der Anordnung im zu projizierenden Muster lassen sich vermittels Triangulation dreidimensionale Koordinaten als Stützpunkte der Oberfläche des Objektes berechnen. Jeweils drei benachbarte nicht in einer Reihe liegende Stützpunkte lassen sich erfindungsgemäß vorteilhaft als Dreieck und damit auch als dreieckige Fläche definieren, so daß eine bei anderen Verfahren erforderliche Flächenrückführung aus einer Punktewolke nicht erforderlich ist. Im Ergebnis dieser Analyse und Berechnung der Bildinformationen aus einem Einzelbild sind digitale Abbilder von eindeutig in ihrer Gestalt bestimmten zusammenhängenden Oberflächensegmenten des Objektes verfügbar. Diese gegebenfalls nicht zusammenhängenden Segmente sind jedoch in ihrer dreidimensionalen Position und Ausrichtung zueinander bekannt.

Weitere Vorteile, Merkmale und Anwendungsmöglichkeiten dervorliegenden Erfindung ergeben sich aus der folgenden Beschreibung eines bevorzugten Ausführungsbeispiels und der zugehörigen Figuren. Es zeigen:
- Figur 1: einen Ausschnitt aus einem kodierten Muster und im unteren Teil Aspekte einer Auswertestrategie,
- Figur 2: zwei Abbildungen einer gekrümmten Fläche mit einem darauf projizierten Muster, und
- Figur 3: Abbildungen eines menschlichen Kopfes mit und ohne darauf projiziertes Muster, jeweils unter verschiedenen Blickrichtungen.

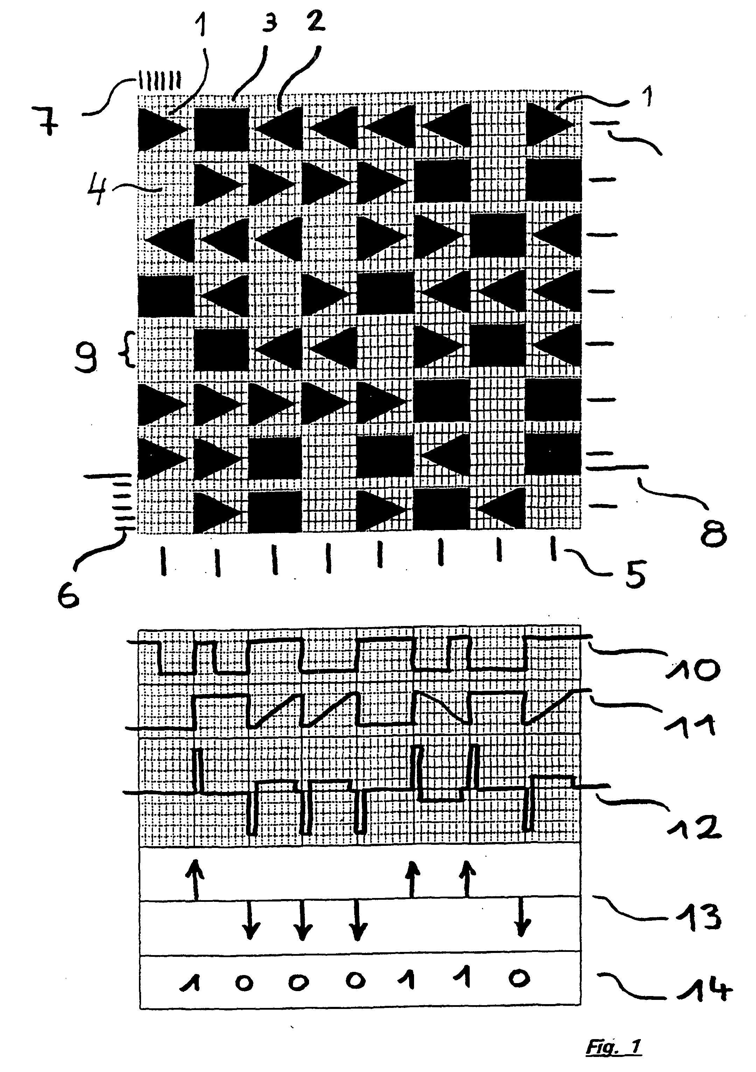

Figur 1 zeigt im oberen Bereich einen Ausschnitt aus einem kodierten Muster, und zwar in einer zur Projektionsachse senkrechten Ebene, und im unteren Bereich die Strukturen, die sich durch das Auswertungsverfahren gemäß der vorliegenden Erfindung ergeben.

In dem Muster gemäß Figur 1 erkennt man ein quadratisches Feld von 8 x 8 Musterelementen mit insgesamt vier verschiedenen Musterelementtypen. Gleichzeitig ist über das abgebildete Muster auch ein Gitternetz von Bildpixeln gelegt, auf welches ein entsprechendes Muster abgebildet werden kann. Wie man erkennt, beansprucht jedes Musterelement einen Flächenbereich von 8 x 5 Bildpixeln. Die vier verschiedenen Musterelementtypen sind allesamt innerhalb des oberen linken Bereiches von 3 x 2 Musterelementen erkennbar. Als physikalisch meßbare Größe für die Identifizierung der Musterstrukturen kann hier beispielsweise der Schwärzungsgrad eines Pixels oder aber der Schwärzungsgrad einer Gruppe jeweils fünf übereinanderliegender Pixel verwendet werden. Umgekehrt könnte man selbstverständlich auch ein Negativ dieses Musters verwenden, in welchem schwarze gegen weiße Flächen ausgetauscht wären.

Bei dem Musterelement 1 ganz oben links in Figur 1 hat man am linken Rand den maximal auftretenden Schwärzungsgrad dieses Musters, wobei anschließend der Schwärzungsgrad von links nach rechts kontinuierlich abnimmt und konkret erfaßt werden könnte als Summe der Schwärzungsgrade aller fünf Pixelelemente in einer Spalte übereinander, die in den Flächenbereich dieses Musterelementes 1 fallen. Die achte Gruppe aus in einer Spalte übereinander angeordneten fünf Pixeln dieses Musterelementes 1 weist keinerlei Schwärzungsgrad mehr auf und ist vollständig weiß. Rechts daneben folgt ein weiteres Musterelement 3, welches über seine ganze Fläche hinweg den maximalen Schwärzungsgrad hat. Dieses Musterelement 3 ist hier konkret mit der Bezugszahl 3 bezeichnet.

Das nächstfolgende Musterelement 2 ist dem Musterelement 1 weitgehend ähnlich, mit dem einzigen Unterschied, daß der Schwärzungsgrad der acht spaltenweise angeordneten Pixelgruppen dieses Musterelements von links nach rechts kontinuierlich zunimmt, während er beim Musterelement 1 kontinuierlich abnahm.

Unter dem Musterelement 1 ist ein Musterelement 4 erkennbar, welches sich von dem Musterelement 2 dadurch unterscheidet, daß es auf seiner gesamten Fläche keinerlei Schwärzungsgrad hat. Charakteristisch sind für das Muster vor allem die Übergänge zwischen benachbarten Musterelementen, die einen Übergang von weiß nach schwarz oder von schwarz nach weiß bilden können, wobei die Musterelemente 1 und 3 es auch ermöglichen, daß sich identische Übergänge von schwarz nach weiß bzw. von weiß nach schwarz an aufeinanderfolgenden Musterelementen mehrfach wiederholen.

Im einzelnen soll dies nun anhand des unteren Bereiches der Figur 1 erläutert werden. Man betrachtet z. B. im oberen Teil der Figur 1 die mit 8 bezeichnete Reihe von Pixeln in der (von oben gezählt) 7. Reihe von Musterelementen des Musters. Wenn man diese Pixelzeile 8 von links nach rechts durchläuft und in vertikaler Richtung jeweils den Schwärzungsgrad des erfaßten Pixels aufträgt, so ergibt sich der in der Zeile 10 des unteren Bildteiles dargestellte Verlauf des Schwärzungsgrades. Zunächst ist in der Zeile 8 von Pixeln der Schwärzungsgrad auf einem Maximalwert, springt dann beim Übergang vom dritten auf das vierte Pixel dieser Reihe auf einen minimalen Wert, der einem weißen Pixel entspricht. Die nächsten fünf Pixel bleiben weiß, zeigen also den minimalen Schwärzungsgrad an, wobei beim Übergang zum nächsten Musterelement in dieser Zeile wiederum ein Sprung auf den maximalen Schwärzungsgrad stattfindet. Da dieses Musterelement mit dem vorangehenden identisch ist, wiederholt sich der Kurvenverlauf. Beim Übergang zum nächsten Musterelement findet wiederum ein Sprung auf den maximalen Schwärzungsgrad statt, der dann allerdings auch konstant erhalten bleibt, bis der Übergang zum vierten Musterelement stattfindet, welches vollständig weiß ist. Innerhalb dessen Flächenbereich bleibt die Pixelzeile 8, die den Schwärzungsgrad anzeigt, auf dem minimalen Wert, wie es in der Zeile 10 dargestellt ist. Die Fortsetzung des Kurvenverlaufs ergibt sich analog zu der vorstehenden Beschreibung.

Der Kurvenverlauf gemäß der Zeile 10 würde sich im übrigen auch dann ergeben, wenn man jeweils fünf Pixel einer Spalte aus dieser Reihe von Musterelementen zusammenfassen würde und lediglich einen Schwellwert für den Schwärzungsgrad festlegen würde, oberhalb dessen die Kurve auf ihren Maximalwert springt und unterhalb dessen sie den Minimalwert annimmt.

Die darunterliegende Kurve 11 wird in etwas anderer Weise gewonnen. In diesem Fall werden jeweils die Schwärzungsgrade fünf übereinanderliegender Pixel in der Gruppe von Pixetreihen wiedergegeben, die im oberen Bildteil mit 9 gekennzeichnet sind und die eine Reihe von Musteretementen definieren. Ganz links befindet sich ein weißes Musterelement 4, so daß entsprechend in der Zeile 11 im Bereich dieses Musterelementes ein minimaler Schwärzungsgrad angezeigt wird. Dann findet ein Sprung auf ein vollständig schwarzes Musterelement statt, so daß anschließend im Bereich des zweiten Musterelementes durchgehend der maximale Schwärzungsgrad wiedergegeben wird. Dann erfolgt wiederum ein Sprung nach unten in eine weiße Pixelspalte ohne jeden Schwärzungsgrad, anschließend nimmt jedoch der Schwärzungsgrad von Pixelspalte zu Pixelspalte kontinuierlich zu, bis am Ende des dritten Musterelementes wieder der maximale Schwärzungsgrad erreicht ist. Dies wiederholt sich im vierten Musterelement, während das fünfte Musterelement wieder dem ersten entspricht. Das sechste Musterelement unterscheidet sich von dem dritten und vierten Musterelement nur durch das Vorzeichen der Änderung des Schwärzungsgrades, d. h. bei dem sechsten Element nimmt der Schwärzungsgrad von einem maximalen Anfangswert von links nach rechts kontinuierlich ab auf den Minimalwert. Das siebte Musterelement dieser Musterelementreihe ist mit dem zweiten identisch, und das achte Musterelement entspricht wiederum dem dritten und vierten Musterelement dieser Reihe.

In der darunter wiedergegebenen Zeile 12 ist eine Auswertung dieser Struktur wiedergegeben, die man anschaulich auch als Ableitung der in der Zeile 11 wiedergegebenen Kurve beschreiben könnte. Konkret sind in der Zeile 12 jeweils die Differenzen der Schwärzungsgrade zweiter aufeinanderfolgender Pixelspalten aus jeweils fünf übereinanderliegenden Pixeln in der Reihe 9 von Musterelementen wiedergegeben. Maximal sind diese Änderungen jeweils am Übergang von einem Musterelement zum nächsten Musterelement, wenn dies ein Übergang von einer rein schwarzen Pixelspalte zu einer rein weißen Pixelspalte ist oder umgekehrt. Den Wert Null haben diese Änderungen innerhalb der rein weißen oder rein schwarzen Musterelemente oder bei einem (hier nicht vorkommenden) Übergang von einem rein weißen oder rein schwarzen zu einem gleichartigen Musterelement (also von Musterlement 3 zu 3 oder von 4 zu 4), und einen vergleichsweise kleinen Wert haben diese Änderungen in dem Bereich, in welchem sich der Schwärzungsgrad der Musterelemente kontinuierlich von links nach rechts ändert.

Wie man in der Zeile 12 erkennt, ergibt sich beim Übergang von weiß nach schwarz ein Ausschlag der Kurve nach oben, während sich beim Übergang von schwarz nach weiß ein Ausschlag der Kurve nach unten ergibt. Die Musterelemente mit kontinuierlicher Änderung des Schwärzungsgrades, hier konkret in Form von Dreiecken, ermöglichen es, daß, wie man in der Zeile 12 erkennt, mehrere positive oder negative Peaks aufeinanderfolgen können, was die Herstellung eines kodierten Musters erleichtert.

In der Zeile 13 sind die positiven und negativen Peaks am Bereich der Musterelementübergänge lediglich durch aufwärts oder abwärts weisende Pfeile ersetzt, und in der Zeile 14 ist eine binäre Darstellung dieser Pfeilrichtungen oder Peakrichtungen in Form der Ziffern 1 und 0 wiedergegeben, wobei positive Peaks bzw. aufwärts weisende Pfeile durch eine Ziffer 1 repräsentiert werden, während negative Peaks oder abwärts gerichtete Pfeile durch eine Ziffer 0 repräsentiert werden. Damit läßt sich die erfaßte Struktur in Form von digitalen Zahlen, konkret in Binärzahlen, in einfacher Weise verarbeiten.

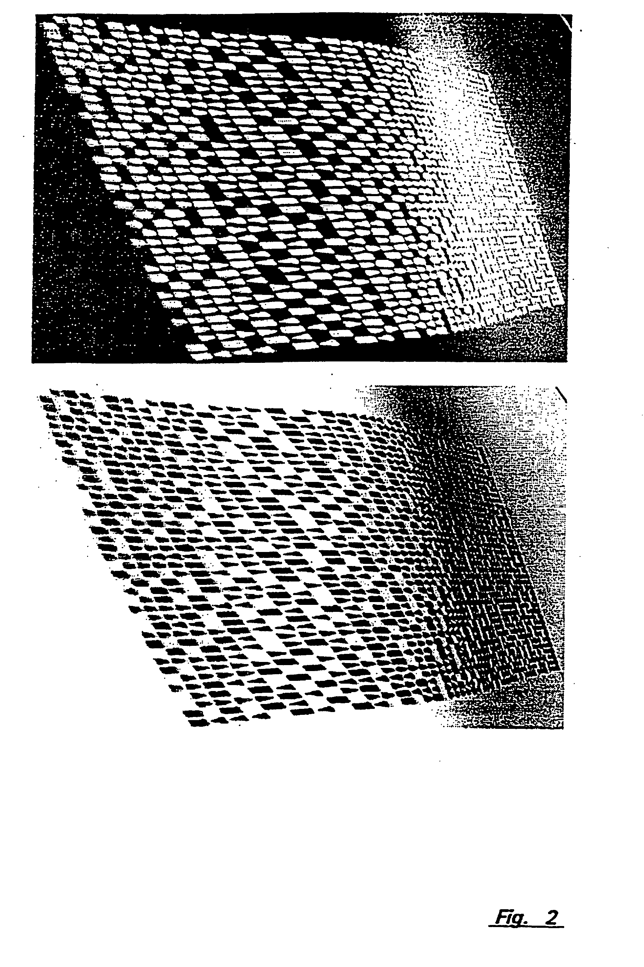

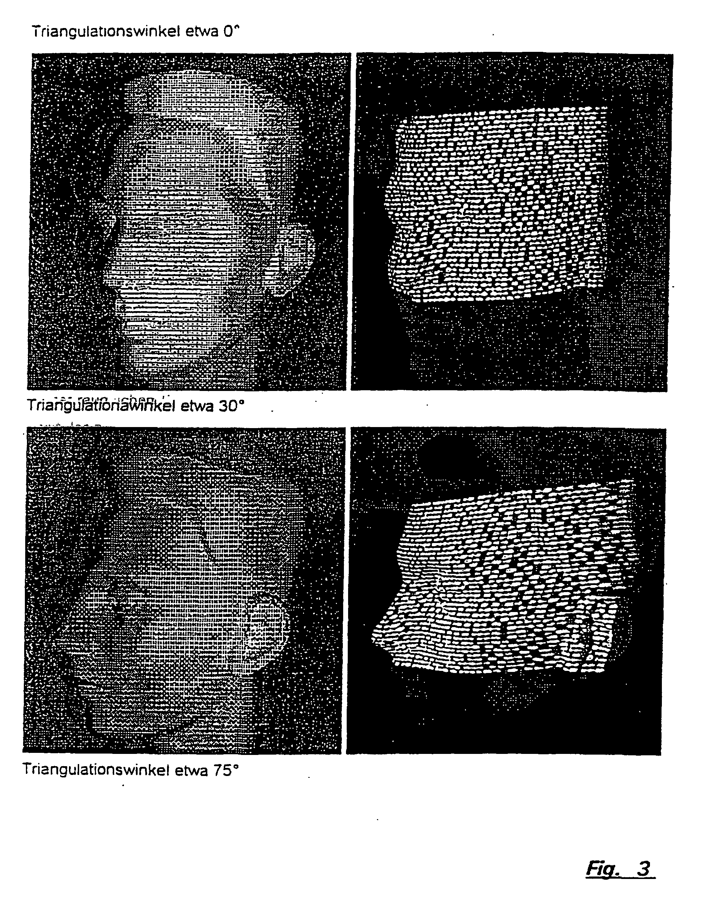

In Figur 3 erkennt man eine im Raum gekrümmte Fläche, auf welcher ein Muster aufprojiziert ist, wobei die Betrachtungsrichtung die Richtung senkrecht zur Papierbene ist, während die Richtung der Projektion auf das Muster gegenüber der Betrachtungsrichtung um den Triangulationswinkel geneigt ist. Unter der Annahme, daß sämtliche erkennbaren Musterelemente im Prinzip den gleichen Flächenbereich beanspruchen, ergibt sich aus der verzerrten größeren Form dieser Musterelemente, daß z. B. Bereiche, in welchen die Musterelemente in horizontaler Richtung langgestreckt erscheinen, relativ zur Projektionsrichtung stark geneigten, jedoch in Betrachtungsrichtung wenig geneigten Flächenbereichen entsprechen, während es sich dort, wo die Musterelemente scheinbar relativ eng beieinanderliegen bzw. in horizontaler Richtung verkürzt erscheinen, gerade umgekehrt ist. Unter Kenntnis des relativen Winkels zwischen Betrachtungsrichtung und Projektionsrichtung läßt sich die exakte Lage jedes Flächenbereiches im Raum ermitteln. Gleichzeitig wird jedoch aus der Figur 2 auch ein besonderes Problem deutlich, welchem sich herkömmliche Mustererkennungsverfahren bei den dargestellten Abbildungsverhältnissen gegenübersehen würden, welches jedoch durch das Verfahren der vorliegenden Erfindung ohne weiteres bewältigt wird. Bei der abgebildeten Oberfläche ist nämlich offenbar der Lichteinfall gerade so, daß im rechten Randbereich des erkennbaren Musters offenbar Reflexe auftreten, so daß das Muster in diesem Bereich wesentlich heller erscheint als im übrigen Bereich. Im unteren Teil der Figur 2 erkennt man eine Negativdarstellung des oberen Musters, so daß in diesem Fall der rechte Bereich des Musters wesentlich dunkler erscheint. Dies erschwert die Erkennung des Musters mit herkömmlichen Mustererkennungsverfahren ganz erheblich oder macht sie sogar unmöglich. Gemäß der vorliegenden Erfindung werden jedoch nur die Hell-Dunkel-Grenzen zwischen benachbarten Musteretementen als eindeutig lokalisierte Punkte erfaßt, und diese Hell-Dunkel-Übergänge finden sich nach wie vor auch in dem Bereich, der durch einen Reflex gestört wird und sind dort als solche immer noch deutlich erkennbar, so daß sie entsprechend der oben zu Figur 1 beschriebenen Auswertung z. B. eindeutig durch die Ziffern 0 und 1 gekennzeichnet werden könnten.

Figur 3 zeigt ein konkretes Anwendungsbeispiel in Form der Erfassung der räumlichen Strukturen eines menschlichen Gesichtes. Während links in Figur 3 das Modell eines menschlichen Gesichtes einmal unter ca. 30° zur Symmetrieebene des Gesichtes und einmal unter ca. 75° zur Symmetrieebene des Gesichtes als Foto wiedergegeben ist, sind rechts jeweils dieselben Ansichten mit einem auf das Gesicht projizierten Muster zu erkennen. Die Projektionsrichtung liegt dabei in der Symmetrieebene des Gesichtes und im wesentlichen horizontal. Unter Kenntnis des Triangulationswinkels, d. h. des Winkels zwischen der Symmetrieebene des Gesichts und der Betrachtungsrichtung, also der Normalen zur Bildebene, und weiterhin unter Kenntnis der realen Musterstruktur, die sich beim Projizieren auf eine zur Projektionsrichtung senkrechte Fläche ergeben würde, läßt sich anhand der Abstände der einzelnen Heil-Dunkel-Übergänge in dem abgebildeten Projektionsmuster mit Hilfe entsprechender Auswerteatgorithmen die räumliche Struktur der Gesichtsoberfläche erfassen und digital speichern. Dies wiederum kann verwendet werden für Zwecke der Personenerkennung oder aber für Zwecke der Medizin, wie z. B. bei der computergestützten, minimalinvasiven Chirurgie.

## Patentansprüche

1. Verfahren zur Erfassung der räumlichen Struktur einer dreidimensionalen Oberfläche durch Projizieren eines Musters auf die Oberfläche entlang einer Projektionsrichtung, die eine erste Achse definiert, und durch pixelweise Erfassung mindestens eines Bereiches des auf die Oberfläche projizierten Musters mit Hilfe eines oder mehrerer Sensoren in einer Betrachtungsrichtung des Sensors oder der Sensoren, welche eine zweite Achse definiert, wobei die erste und die zweite Achse oder eine zur zweiten Achse parallele Gerade sich unter einem von 0° verschiedenen Winkel schneiden, so daß die erste und die zweite Achse bzw. die hierzu parallele Gerade eine Triangulationsebene aufspannen, wobei das Muster mindestens bei Projektion in eine Ebene senkrecht zur ersten Achse durch eine sich ändernde, von dem Sensor bzw. den Sensoren erfaßbare physikalische Größe definiert ist und wobei das Muster derart ausgestaltet ist, daß die Differenz der physikalisch meßbaren Größe, gemessen zwischen vorgebbaren Bildpixeln oder Pixelgruppen (9) entlang einer vorgebbaren, vorzugsweise zur Triangulationsebene parallelelen, Pixelreihe (8) mindestens zwei verschiedene Werte annimmt, **dadurch gekennzeichnet, daß** zur Auswertung der abgebildeten Musterstruktur jeweils nur Änderungen der physikalischen Größe zwischen den vorgebenen Pixeln oder vorgegebenen Pixelgruppen (9) einer oder mehrerer, vorzugsweise zur Triangulationsebene parallelen, Pixelreihen (8) erfaßt und in räumliche Koordinaten der Oberfläche umgerechnet werden.

2. Verfahren nach Anspruch 1, **dadurch gekennzeichnet, daß** die Differenz der physikalisch meßbaren Größe jeweils zwischen benachbarten Pixeln oder Pixelgruppen (9) entlang einer vorgegebenen Richtung ermittelt wird.

3. Verfahren nach Anspruch 1 oder 2, **dadurch gekennzeichnet, daß** das Muster derart ausgerichtet ist, daß die entlang einer Richtung auftretenden Änderungen der physikalisch meßbaren Größe dem Betrag nach mindestens teilweise die zwischen beliebigen, gleich großen Pixeln oder Pixelgruppen (9) in dem abgebildeten Muster maximal auftretende Differenz annehmen, wobei die übrigen auftretenden Änderungen entlang dieser Richtung vergleichsweise kleine Werte annehmen

4. Verfahren nach einem der Ansprüche 1 -3, **dadurch gekennzeichnet, daß** jeweils in einer Spalte übereinanderliegende Pixel mehrerer paralleler Pixelreihen (8) zu einer Pixelgruppe (9) zusammengefaßt und die Änderungen der physikalischen Größe jeweils zwischen derartigen benachbarten Pixelgruppen (9) ausgewertet werden.

5. Verfahren nach Ansprüche 1 - 4, **dadurch gekennzeichnet, daß** das Muster ein kodiertes Muster ist, bei welchem verschiedene Musterbereiche einer hinreichenden Größe voneinander unterscheidbar und in ihrer Position innerhalb des Gesamtmusters festgelegt sind.

6. Verfahren nach einem der Ansprüche 1 bis 5, **dadurch gekennzeichnet, daß** das Muster aus Musteretementen (1,2,3,4) gebildet wird, die in einer Ebene senkrecht zur Projektionsrichtung jeweils etwa gleich große Flächen beanspruchen.

7. Verfahren nach Anspruch 6, **dadurch gekennzeichnet, daß** mindestens zwei Typen von Musterelementen (1,2,3,4) vorgesehen sind, in deren Flächenbereich die meßbare physikalische Größe jeweils einen nahezu konstanten Wert hat, wobei sich der Wert dieser physikalischen Größe zwischen den beiden Typen von Musterelementen (1,2,3,4) deutlich meßbar unterscheidet.

8. Verfahren nach Anspruch 6 oder 7, **dadurch gekennzeichnet, daß** mindestens ein Typ eines Musterelementes (1,2,3,4) vorgesehen ist, bei welchem sich mindestens innerhalb eines Teiles seines Flächenbereiches entlang einer vorgegebenen Richtung der Wert der physikalischen Größe im wesentlichen kontinuierlich verändert.

9. Verfahren nach Anspruch 8, **dadurch gekennzeichnet, daß** mindestens zwei Typen von Musterelementen (1,2,3,4) vorgesehen sind, die sich durch das Vorzeichen der Änderung der physikalischen Größe innerhalb ihres Flächenbereiches und entlang der vorgegebenen Richtung unterscheiden.

10. Verfahren nach einem der Ansprüche 5 bis 9, **dadurch gekennzeichnet, daß** die verschiedenen Typen von Musterelementen (1,2,3,4) in einer kodierten Verteilung auf der Fläche des projizierten Musters angeordnet sind.

11. Verfahren nach einem der Ansprüche 5 bis 10, **dadurch gekennzeichnet, daß** die verschiedenen Typen von Musteretementen (1,2,3,4) in einer Zufallsanordnung über die Projektionsfläche verteilt sind.

12. Verfahren nach einem der Ansprüche 6 bis 11, **dadurch gekennzeichnet, daß** der Flächenbereich eines Musterelementes (1,2,3,4) in der Abbildungsebene einem Feld von m x n Pixeln entspricht mit m, n ≥ 2 und m << M und n << N, wobei M x N die Gesamtzahl der erfaßten Bildpixel ist.

13. Verfahren nach einem der Ansprüche 5 bis 12, **dadurch gekennzeichnet, daß** für die Musterkodierung und Identifizierung der Lage von Musterelementen (1,2,3,4) nur Änderungen ausgewertet werden, welche größer sind als die Änderungen zwischen benachbarten Pixeln oder Pixelgruppen (9) innerhalb der Musterelemente (1,2,3,4), die in einer Ebene senkrecht zur Projektionsrichtung jeweils etwa gleich große Fläche beanspruchen.

14. Verfahren nach Anspruch 13, **dadurch gekennzeichnet, daß** mindestens zwei Typen von Musterelementen (1,2,3,4) vorgesehen sind, in deren Flächenbereich die meßbare physikalische Größe jeweils einen nahezu konstanten Wert hat, wobei sich der Wert dieser physikalischen Größe zwischen den beiden Typen von Musterelementen (1,2,3,4) deutlich meßbar unterscheidet.

15. Verfahren nach einem der Ansprüche 1 bis 14, **dadurch gekennzeichnet, daß** zur Erfassung der räumlichen Struktur der dreidimensionalen Oberfläche mindestens zwei Messungen mit relativ zueinander abgewinkelten Triangulationsebenen durchgeführt und miteinander kombiniert werden.

## Claims

1. A process for detecting the spatial structure of a three-dimensional surface by projection of a pattern on to the surface along a projection direction which defines a first axis, and by pixel-wise detection of at least one region of the pattern projected on to the surface, by means of one or more sensors in a viewing direction of the sensor or sensors, which defines a second axis, wherein the first and the second axes or a straight line parallel to the second axis intersect at an angle different from 0° so that the first and the second axes or the straight line parallel thereto define a triangulation plane, wherein the pattern is defined at least upon projection into a plane perpendicularly to the first axis by a varying physical parameter which can be detected by the sensor or sensors, and wherein the pattern is such that the difference in the physically measurable parameter, measured between predeterminable image pixels or pixel groups (9), along a predeterminable pixel row (8) which is preferably parallel to the triangulation plane, assumes at least two different values, **characterised in that**, for the purposes of evaluation of the imaged pattern structure, only respective changes in the physical parameter between the predetermined pixels or predetermined pixel groups (9) of one or more pixel rows (8) which are preferably parallel to the triangulation plane are detected and converted into spatial co-ordinates of the surface.

2. A process according to claim 1 **characterised in that** the difference in the physically measurable parameter between respective adjacent pixels or pixel groups (9) is ascertained along a predetermined direction.

3. A process according to claim 1 or claim 2 **characterised in that** the pattern is oriented in such a way that the changes in the physically measurable parameter, which occur along a direction, assume in respect of amount at least in part the difference which occurs as a maximum between any equal-sized pixels or pixel groups (9) in the imaged pattern, wherein the other changes which occur assume along that direction comparatively low values.

4. A process according to one of claims 1 to 3 **characterised in that** pixels, which are disposed in mutually superposed relationship in a column, of a plurality of parallel pixel rows (8) are assembled to form a pixel group (9), and the changes in the physical parameter are evaluated between respective ones of such adjacent pixel groups (9).

5. A process according to claims 1 to 4 **characterised in that** the pattern is an encoded pattern in which various pattern regions of an adequate size are distinguishable from each other and are fixed in respect of their position within the overall pattern.

6. A process according to one of claims 1 to 5 **characterised in that** the pattern is formed from pattern elements (1, 2, 3, 4) which each occupy approximately equal-sized surface areas in a plane perpendicularly to the projection direction.

7. A process according to claim 6 **characterised in that** there are provided at least two types of pattern elements (1, 2, 3, 4), in the surface region of which the measurable physical parameter is respectively of an almost constant value, wherein the value of said physical parameter clearly measurably differs between the two types of pattern elements (1, 2, 3, 4).

8. A process according to claim 6 or claim 7 **characterised in that** there is provided at least one type of a pattern element (1, 2, 3, 4) in which the value of the physical parameter substantially continuously changes at least within a part of its surface region along a predetermined direction.

9. A process according to claim 8 **characterised in that** there are provided at least two types of pattern elements (1, 2, 3, 4) which differ by the sign of the change in the physical parameter within the surface region thereof and along the predetermined direction.

10. A process according to one of claims 5 to 9 **characterised in that** the various types of pattern elements (1, 2, 3, 4) are arranged in an encoded distribution on the surface of the projected pattern.

11. A process according to one of claims 5 to 10 **characterised in that** the various types of pattern elements (1, 2, 3, 4) are distributed in a random arrangement over the projection surface.

12. A process according to one of claims 6 to 11 **characterised in that** the surface region of a pattern element (1, 2, 3, 4) in the imaging plane corresponds to an area of m x n pixels with m, n ≥ 2 and m << M and n << N, wherein M x N is the total number of detected image pixels.

13. A process according to one of claims 5 to 12 **characterised in that** for pattern encoding and identification of the position of pattern elements (1, 2, 3, 4), only changes are evaluated which are greater than the changes between adjacent pixels or pixel groups (9) within the pattern elements (1, 2, 3, 4) which each occupy approximately equal-sized surface areas in a plane perpendicularly to the projection direction.

14. A process according to 13 **characterised in that** there are provided at least two types of pattern elements (1, 2, 3, 4), in the surface region of which the measurable physical parameter is respectively of an almost constant value, wherein the value of said physical parameter clearly measurably differs between the two types of pattern elements (1, 2, 3, 4).

15. A process according to one of claims 1 to 14 **characterised in that** for detecting the spatial structure of the three-dimensional surface at least two measurements with triangulation planes which are angled relative to each other are implemented and combined together.

## Revendications

1. Procédé de détection de la structure spatiale d'une surface tridimensionnelle par projection d'une trame sur la surface dans une direction de projection qui définit un premier axe, et en détectant pixel par pixel au moins une région de la trame projetée sur la surface à l'aide d'un capteur ou de plusieurs capteurs dans une direction d'observation du capteur ou des capteurs qui définit un deuxième axe, le premier axe et le deuxième axe, ou une droite parallèle au deuxième axe, se coupant avec un angle différent de 0° de sorte que le premier axe et le deuxième axe, resp. la droite parallèle à ce dernier, sous-tendent un plan de triangulation, la trame étant définie lors de la projection dans un plan perpendiculaire au premier axe par une grandeur physique variable et détectable par le capteur resp. les capteurs, et la trame étant conformée de telle sorte que la différence de grandeur physiquement mesurable, mesurée entre des pixels d'image ou des groupes de pixels d'image (9) prédéterminés le long d'une rangée de pixels (8) prédéterminée, avantageusement parallèle au plan de triangulation, prend au moins deux valeurs différentes,
**caractérisé en ce que** seules des variations de la grandeur physique entre les pixels prédéterminés ou les groupes de pixels prédéterminés (9) d'une ou plusieurs rangées de pixels (8), avantageusement parallèles au plan de triangulation, sont converties par le calcul en coordonnées spatiales de la surface en vue d'évaluer la structure tramée illustrée.

2. Procédé selon la revendication 1, **caractérisé en ce que** l'on détermine la différence de grandeur physiquement mesurable entre des pixels ou des groupes de pixels (9) adjacents dans une direction prédéterminée.

3. Procédé selon la revendication 1 ou 2, **caractérisé en ce que** la trame est orientée de telle sorte que les variations de la grandeur physiquement mesurable dans une direction prennent au moins partiellement selon la valeur la différence maximale entre des pixels ou des groupes de pixels (9) quelconques de même taille dans la trame illustrée, les autres variations dans cette direction prenant des valeurs relativement faibles.

4. Procédé selon l'une des revendications 1 à 3, **caractérisé en ce que** des pixels, situés les uns au-dessus des autres dans une fente, de plusieurs rangées de pixels parallèles (8) sont rassemblés pour former un groupe de pixels (9) et les variations de la grandeur physique sont exploitées à chaque fois entre des groupes de pixels (9) adjacents de ce type.

5. Procédé selon les revendications 1 à 4, **caractérisé en ce que** la trame est une trame codée dans laquelle différentes régions de trame de grandeur suffisante peuvent être distinguées les unes des autres et leur position est déterminée à l'intérieur de toute la trame.

6. Procédé selon l'une des revendications 1 à 5, **caractérisé en ce que** la trame est formée d'éléments de trame (1, 2, 3, 4) qui exigent chacun des surfaces à peu près de même taille dans un plan perpendiculaire à la direction de projection.

7. Procédé selon la revendication 6, **caractérisé en ce qu'**il est prévu au moins deux types d'éléments de trame (1, 2, 3, 4) présentant une région de surface dans laquelle la grandeur physique mesurable a chaque fois une valeur à peu près constante, la valeur de cette grandeur physique se distinguant de façon nettement mesurable entre les deux types d'éléments de trame (1, 2, 3, 4).

8. Procédé selon la revendication 6 ou 7, **caractérisé en ce qu'**au moins un type d'élément de trame (1, 2, 3, 4) est tel que la valeur de la grandeur physique varie de façon sensiblement continue au moins à l'intérieur d'une partie de sa région de surface dans une direction prédéterminée.

9. Procédé selon la revendication 8, **caractérisé en ce qu'**il est prévu au moins deux types d'éléments de trame (1, 2, 3, 4) qui se distinguent par le signe de la variation de la grandeur physique à l'intérieur de sa région de surface et dans la direction prédéterminée.

10. Procédé selon l'une des revendications 5 à 9, **caractérisé en ce que** les différents types d'éléments de trame (1, 2, 3, 4) sont agencés sur la surface de la trame projetée suivant une répartition codée.

11. Procédé selon l'une des revendications 5 à 10, **caractérisé en ce que** les différents types d'éléments de trame (1, 2, 3, 4) sont répartis sur la surface de projection suivant un agencement aléatoire.

12. Procédé selon l'une des revendications 6 à 11, **caractérisé en ce que** la région de surface d'un élément de trame (1, 2, 3, 4) correspond dans le plan d'illustration à une zone de m x n pixels, avec m, n ≥ 2 et m << M et n << N, où M x N est le nombre total de pixels d'image détectés.

13. Procédé selon l'une des revendications 5 à 12, **caractérisé en ce que**, pour le codage de la trame et l'identification de la position des éléments de trame (1, 2, 3, 4), on n'exploite que les variations qui sont supérieures aux variations entre des pixels ou des groupes de pixels (9) adjacents à l'intérieur des éléments de trame (1, 2, 3, 4) qui exigent chacun une surface à peu près de même taille dans un plan perpendiculaire à la direction de la projection.

14. Procédé selon la revendication 13, **caractérisé en ce qu'**il est prévu au moins deux types d'éléments de trame (1, 2, 3, 4) présentant une région de surface dans laquelle la grandeur physique mesurable a chaque fois une valeur à peu près constante, la valeur de cette grandeur physique se distinguant de façon nettement mesurable entre les deux types d'éléments de trame (1, 2, 3, 4).

15. Procédé selon l'une des revendications 1 à 14, **caractérisé en ce que**, pour détecter la structure spatiale de la surface tridimensionnelle, on effectue au moins deux mesures, que l'on combine entre elles, avec des plans de triangulation agencés angulairement l'un par rapport à l'autre.
